# EUROPEAN PATENT APPLICATION

(11) **EP 2 496 011 A1**
(43) Date of publication of application: **05.09.2012**
(21) Application number: 10826578.6
(22) Date of filing: 20.10.2010
(51) Int. Cl.: H04W 28/10, H04L 12/56

(54) **WIRELESS TRANSMISSION DEVICE AND METHOD, WIRELESS TRANSMISSION NETWORK, AND COMPUTER PROGRAM**

(30) Priority: 29.10.2009 JP 2009248735
(71) Applicant: NEC Corporation, Tokyo 108-8001 (JP)
(72) Inventor: MUKOUYAMA Motohiro, Tokyo 108-8001 (JP)
(74) Representative: Glawe, Delfs, Moll
(86) International application number: PCT/JP2010/068470
(87) International publication number: WO 2011/052446

(57) **Abstract**

A radio transmission apparatus includes a radio transmission and reception device that performs data transmission and reception via radio lines; a wire transmission and reception device that performs data transmission and reception via at least one wire line, so as to receive data via the wire line, and send the data via the radio lines. The apparatus has a flow control device. When the data received via the wire line is converted into transmission data to be sent via the radio lines, if the amount of the data received via the wire line exceeds a total transmission capacity of the radio lines, the flow control device performs flow control so as to convert the data received via the wire line to the transmission data whose amount is reduced to be transmittable through a band of the radio lines. The apparatus, has a transmission data distribution device that distributes the transmission data to the radio lines based on a ratio between transmission capacities thereof.

## Description

### TECHNICAL FIELD

The present invention relates to a radio transmission apparatus, a radio transmission method, a radio transmission network, and a computer program, and especially to those which connect with a wired line, and have an adaptive modulation function (called "AMR (Adaptive Modulation Radio)" below) and a function of connecting two different points via a plurality of radio lines.
Priority is claimed on Japanese Patent Application No. 2009-248735, filed October 29, 2009, the contents of which are incorporated herein by reference.

### BACKGROUND ART

Recently, as a radio transmission apparatus which can connect two different points via radio lines, one that has an AMR function has been developed.
Such a radio transmission apparatus has a subject of implementing a (load balancing) function in which when data obtained through a wire line is sent through the radio lines, the state of each radio line is monitored, and if the transmission capacity of any radio line has changed, load distribution of the sent data in accordance with the transmission capacity of each radio line which receives the data is performed.
In another subject to be achieved by the apparatus, transmission capacity information in accordance with the modulation method of the radio lines is obtained, and if the amount of sent data exceeds the total amount of transmission capacities of the radio lines, destruction of the sent data through the radio lines is prevented by performing flow control.

In order to achieve the above subjects, Patent Document 1 discloses a technique in which a threshold used for the load distribution of the lines is set based on the capacity of each line so as to implement a load distribution which can handle a change in the number of lines or the capacity of each line in the relevant system. In the technique, as long as the amount of sent data does not exceed the total line capacity of all lines, it is possible to prevent data destruction due to a shortage of the line capacity of a specific line.
Patent Document 2 discloses a technique of acquiring an effective transmission speed when the traffic of the information which passes through the radio lines dynamically varies. Patent Document 2 also discloses a function of dividing each transmission packet into short packets in accordance with the band of each line.

### PRIOR ART DOCUMENT

### Patent Document

Patent Document 1: Japanese Unexamined Patent Application, First Publication No. 2001-136208.
Patent Document 2: Japanese Unexamined Patent Application, First Publication No. 2000-216815.

### DISCLOSURE OF INVENTION

### Problem to be Solved by the Invention

Retarding the known radio transmission apparatuses described in BACKGROUND ART, for example, in the load balancing control method disclosed in Patent Document 1, the threshold used for the load distribution of the lines is set based on the predetermined capacity of each line, as described above. Such a process needs a premise that the capacity of each line does not change during the running of the load balancing control method.
In other periods than the running of the load balancing control method, the sent data having an amount which does not exceed the total line capacity may certainly be processed by executing a load distribution of the sent data in accordance with a static change in the number of lines or the capacity of line while preventing destruction of the sent data due to a shortage of the line capacity of a specific line.

However, in the case of the radio transmission apparatus having the AMR function, the transmission capacity of the radio lines dynamically varies in accordance with the modulation method thereof. Therefore, if employing the load balancing control method disclosed in the above-described Patent Document 1, the total transmission capacity of the radio lines reduces. As a result, if the amount of the sent data exceeds the total transmission capacity of all lines, destruction of the sent data occurs through the radio lines.

That is, the first problem of the known radio transmission apparatuses is that since they need setting (by using a line interface setting unit) of the number of lines to be controlled and the capacity of each line in advance, they cannot handle a dynamic change in the transmission capacity of radio lines by means of the AMR function although they can handle any static change of the relevant system.
The second problem of the known radio transmission apparatuses is that although they can prevent data destruction as long as transmission data having an amount which does not exceed the total line capacity of all lines is processed, data destruction may occur through the lines if the line capacity of a specific line dynamically changes or decreases so that the amount of sent data exceeds the total line capacity.

In consideration of the above problems, an object of the present invention is to provide a radio transmission apparatus having a load balancing control circuit, by which even if the transmission capacity of a specific radio line has changed, a radio transmission apparatus having the AMR function can perform flow control based on the transmission capacity and the amount of sent data in accordance with the modulation method of the relevant radio lines, thereby preventing destruction of the data sent through the radio lines and performing the load distribution of the sent data based on the ratio between the transmission capacities of the radio lines.

### Means for Solving the Problem

In order to achieve the above object, the present invention provides a radio transmission apparatus comprising:
a radio transmission and reception device that performs data transmission and reception via a plurality of radio lines; and
a wire transmission and reception device that performs data transmission and reception via at least one wire line, and
receiving data via the wire line, and sending the data via the radio lines,
wherein the radio transmission apparatus further comprises:
a flow control device wherein when the data received via the wire line is converted into transmission data to be sent via the radio lines, if the amount of the data received via the wire line exceeds a total transmission capacity of the radio lines, the flow control device performs flow control so as to convert the data received via the wire line to the transmission data whose amount is reduced to be transmittable through a band of the radio lines; and
a transmission data distribution device that distributes the transmission data to the respective radio lines based on a ratio between radio transmission capacities of the radio lines.

The present invention also provides a radio transmission method that connects two different points via a plurality of radio lines and sends data, wherein each of the radio lines is monitored, and if respective radio transmission capacities of the radio lines change, data to be transmitted is distributed to the respective radio lines based on a ratio between the transmission capacities of the radio lines.
Topically, the method comprises:
a radio transmission and reception step that performs data transmission and reception via the radio lines; and
a wire transmission and reception step that performs data transmission and reception via at least one wire line, and
receiving data via the wire line, and sending the data via the radio lines,
wherein the radio transmission method further comprises:
a flow control step wherein when the data received via the wire line is converted into transmission data to be sent via the radio lines, if the amount of the data received via the wire line exceeds a total transmission capacity of the radio lines, the flow control step performs flow control so as to convert the data received via the wire line to the transmission data whose amount is reduced to be transmittable through a band of the ratio lines; and
a transmission data distribution step that distributes the transmission data to the respective radio lines based on a ratio between the radio transmission capacities of the radio lines.

The present invention also provides a radio transmission network having a structural element which is the above-described radio transmission apparatus, which connects two different points via the radio lines.

The present invention also provides a computer program comprising:
a radio transmission and reception step that performs data transmission and reception via a plurality of radio lines; and
a wire transmission and reception step that performs data transmission and reception via at least one wire line, and
masking a computer to control a radio transmission apparatus which receives data via the wire line and sends the data via the radio lines,
wherein the computer program further comprises:
a flow control step wherein when the data received via the wire line is converted into transmission data to be sent via the radio lines, if the amount of the data received via the wire line exceeds a total transmission capacity of the radio lines, the flow control step performs flow control so as to convert the data received via the wire line to the transmission data whose amount is reduced to be transmittable through a band of the radio lines; and
a transmission data distribution step that distributes the transmission data to the respective radio lines based on a ratio between radio transmission capacities of the radio lines.

As described above, Patent Document 2 discloses a technique used when the traffic of information which passes through radio lines dynamically varies. In contrast, the radio transmission apparatus of the present invention handles a case in which the band of the radio lines dynamically varies. That is, in the present invention, it is possible to distribute data to the respective radio lines even when not the effective transmission speed, but the band of the radio lines dynamically varies. Therefore, the function and the structure are different between Patent Document 2 and the present invention.
Additionally, the present invention does not prevent the destruction of transmission data by a function of dividing each transmission packet into short packets in accordance with the band of each line as disclosed in the above-described Patent Document 2, but prevents the destruction of transmission data by performing a flow control (that is, reducing the amount of transmission data to be transmittable through the band of the radio lines).

### Effect of the Intention

As described above, according to the radio transmission apparatus of the present invention, the amount of transmission data is monitored, and flow control of the transmission data is performed so that the amount thereof does not exceed the total transmission capacity, thereby producing converted transmission data whose amount is reduced to be transmittable through the band of the relevant lines, and distributing the transmission data based on a ratio between the radio transmission capacities of the radio lines. Therefore, appropriate load balancing control can be performed while preventing destruction of the transmission data through the radio line system.

### DESCRIPTION OF THE DRAWINGS

Fig. 1 is a diagram showing the general structure of the radio transmission apparatus as an embodiment of the present invention.
Fig. 2 is a diagram showing the structure of the load balancing control unit 11 in the radio transmission apparatus as the embodiment of the present invention.
Fig. 3 is a diagram showing a relationship between the transmission capacity information of radio lines and the amount of transmission data, as example data.
Fig. 4 is a diagram showing another relationship between the transmission capacity information of radio lines and the amount of transmission data, as example data.

### MODE FOR CARRYING OUT THE INVENTION

The radio transmission apparatus, the radio transmission method, and the radio transmission network of the present invention each can connect two different points via a plurality of radio lines. In particular, the radio transmission apparatus of the present invention has an AMR function and implements a (load balancing) function in which when data obtained through a wire line is sent through the radio lines, the state of each radio line is monitored, and if the transmission capacity of any radio line has changed, load distribution of the sent data in accordance with the transmission capacity of each radio line which receives the data is performed.
In addition, the radio transmission apparatus of the present invention has a structure by which transmission capacity information in accordance with the modulation method of the radio lines is obtained, and if the amount of sent data exceeds the total amount of transmission capacities of the radio lines, destruction of the sent data through the radio lines is prevented by performing flow control.

Below, embodiments of the radio transmission apparatus, the radio transmission method, the radio transmission network, and the computer program of the present invention will be explained in detail with reference to the drawings.

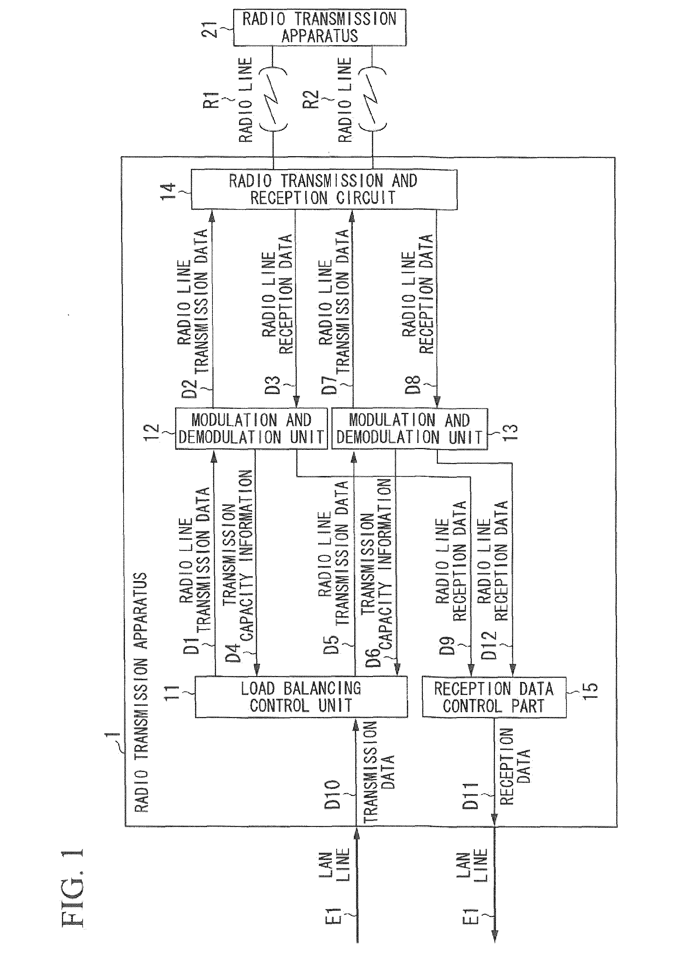

Fig. 1 is a diagram showing the general structure of the radio transmission apparatus as an embodiment of the present invention.
In Fig. 1, the radio transmission apparatus I of the present embodiment has a load balancing control unit 11 that receives transmission data D 10 via a LAN (Local Area Network) line E1; a modulation and demodulation unit 12 that performs modulation and demodulation of radio line transmission data D1; a modulation and demodulation unit 13 that performs modulation and demodulation of radio line transmission data D5; a radio transmission and reception circuit 14 that performs transmission and reception via radio lines R1 and R2; and a reception data control part 15 that sends reception data D11 via the LAN line E1.
The LAN line E1 may be based on rules standardized by the IEEE 802.3 committee.

Below, the load balancing control unit 11 performs the control for distributing the transmission data D10, which was received by the radio transmission apparatus 1 via the LAN line E1, into the radio lines R1 and R2.
The above distribution is performed based on transmission capacity information D4 received from the modulation and demodulation unit 12 and transmission capacity information D6 received from the modulation and demodulation unit 13. The load balancing control unit 11 sends the radio line transmission data D1 and the radio line transmission data D5, which are determined by the above distribution, respectively to the modulation and demodulation unit 12 and the modulation and demodulation unit 13.
Accordingly, the load balancing control unit 11 monitors the transmission capacities of the radio lines R1 and R2 based on the transmission capacity information D4 received from the modulation and demodulation unit 12 and the transmission capacity information D6 received from the modulation and demodulation unit 13.

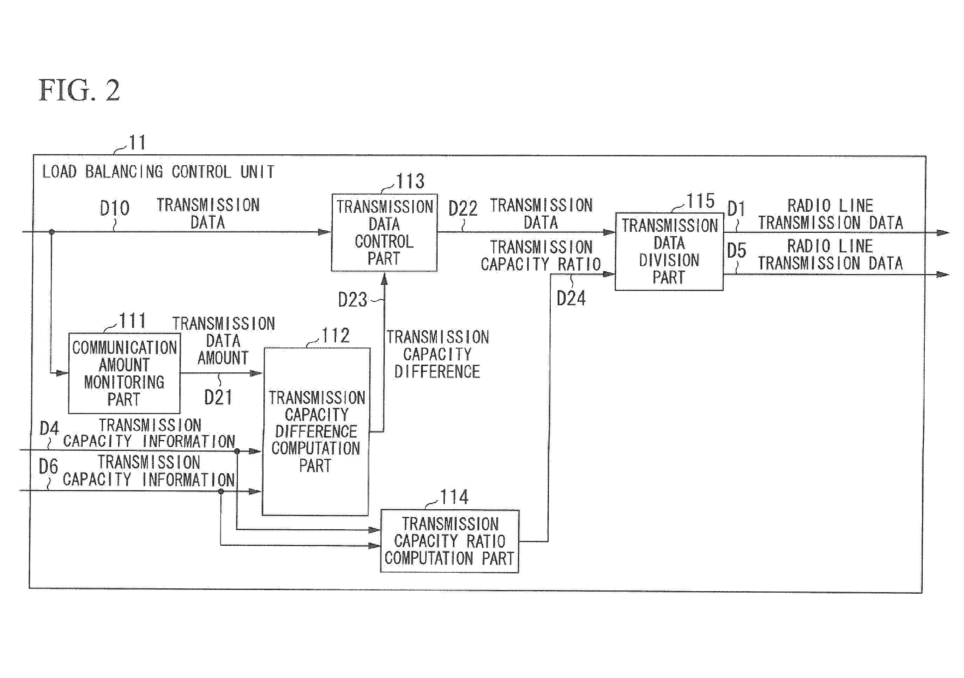

The load balancing control unit 11 also monitors the transmission data D10 by means of a communication amount monitoring part 111 (see Fig. 2) of the unit 11, and outputs a transmission data amount D21 (as monitored data) to a transmission capacity difference computation part 112 (i.e., structural element that computes the remaining amount of the transmission capacity).
The above-described transmission capacity information D4, transmission capacity information D6, and transmission data amount D21 are input into the transmission capacity difference computation part 112. If the total amount of transmission data exceeds the total transmission capacities of the radio lines R1 and R2, a transmission data control part 113 performs the flow control, so as to reduce the amount of data output to the radio lines R1 and R2.
The load balancing control unit 11 also performs division of the data sent via the radio lines R1 and R2 based on a transmission capacity ratio D24 which indicates a ratio between the transmission capacities of the radio lines R1 and R2.

The modulation and demodulation unit 12 and the modulation and demodulation unit 13 respectively output the radio line transmission data D1 and the radio line transmission data D5, each received from the load balancing control unit 11, to the radio transmission and reception circuit 14.
Additionally, the modulation and demodulation unit 12 and the modulation and demodulation unit 13 each have a function of controlling the modulation method of the radio lines R1 and R2, and output the transmission capacity information items D4 and D6 based on the modulation method of the radio lines R1 and R2 to the load balancing control unit 11.
In addition, the modulation and demodulation unit 12 sends radio line reception data D3, which was received from the radio transmission and reception circuit 14, to the reception data control part 15 in the form of radio line reception data D9. Similarly, the modulation and demodulation unit 13 sends radio line reception data D8, which was received from the radio transmission and reception circuit 14, to the reception data control part 15 in the form of radio line reception data D12.

The radio transmission and reception circuit 14 sends radio line transmission data D2, which was received from the modulation and demodulation unit 12, via the radio line R1, and sends radio line transmission data D7, which was received from the modulation and demodulation unit 13, via the radio line R2.
The radio transmission and reception circuit 14 also sends radio line reception data D3, which was received via the radio line R1, to the modulation and demodulation unit 12, and sends radio line reception data D8, which was received via the radio line R2, to the modulation and demodulation unit 13.
The reception data control part 15 sends the radio line reception data D9 (received from the modulation and demodulation unit 12) and the radio line reception data D12 (received from the modulation and demodulation unit 13) via the LAN line E1 in the form of reception data D11.

Fig. 2, which was previously referred to, is a diagram showing the structure of the load balancing control unit 11 of the radio transmission apparatus in the embodiment of the present invention.
In Fig. 2, the load balancing control unit 11 has the communication amount monitoring part 111 that monitors the communication amount of the transmission data D10 and outputs the monitored data as transmission data amount D21; the transmission capacity difference computation part 112 that computes a difference between the total transmission capacity of the radio lines and the transmission data amount; the transmission data control part 113 that controls the transmission data D10 based on a transmission capacity difference D23 and outputs the controlled data as transmission data D22; a transmission capacity ratio computation part 114 that computes the ratio between the transmission capacities of the radio lines R1 and R2; and a transmission data division part 115 (as a transmission data distribution device) that divides the transmission data D22 into the radio line transmission data D1 and the radio line transmission data D5, which respectively correspond to the radio lines R1 and R2, based on the transmission capacity ratio D24.

Below, the functions of the load balancing control unit 11 shown in Fig. 2 will be explained in detail.
The communication amount monitoring part 111 monitors the amount of the received transmission data D10 and outputs the monitored data as the transmission data amount D21 to the transmission capacity difference computation part 12.
Based on the transmission data amount D21 received from the communication amount monitoring part 111 and the transmission capacity information items D4 and D6, the transmission capacity difference computation part 112 computes the difference between the transmission data amount D21 and the total radio line transmission capacity of the radio lines R1 and R2 (see Fig. 1), and sends the computed value as the transmission capacity difference D23 to the transmission data control part 113.

Based on the received transmission capacity information items D4 and D6, the transmission capacity ratio computation part 114 computes the ratio between the transmission capacities of the radio lines R1 and R2, and sends the computed value as the transmission capacity ratio D24 to the transmission data division part 115.
The transmission data control part 113 inspects the received transmission data D10 based on the transmission capacity difference D23 received from the transmission capacity difference computation part 112, If it is determined that the amount of transmission data D10 exceeds the above-described total transmission capacity of the radio lines (i.e., the transmission capacity difference D23 has been obtained as a negative value), the transmission data control part 113 (as the flow control device) performs the flow control, and sends the controlled data as the transmission data D22 to the transmission data division part 115.

The transmission data division part 115 divides the transmission data D22 received from the transmission data control part 113, based on the transmission capacity ratio D24 to received from the transmission capacity ratio computation part 114, and outputs divided data as the radio line transmission data D1 and the radio line transmission data D5.
It is well known by the skilled person that the transmission capacity of a radio line changes when changing the modulation method. Since this knowledge does not directly relate to the present invention, an explanation thereof is omitted here.
According to the above structure, the load balancing control unit I can implement a load balancing control function applicable to the radio transmission apparatus 1 having the AMR function.

### Explanation of operations

Below, operations of the radio transmission apparatus of the present embodiment will be explained using examples.

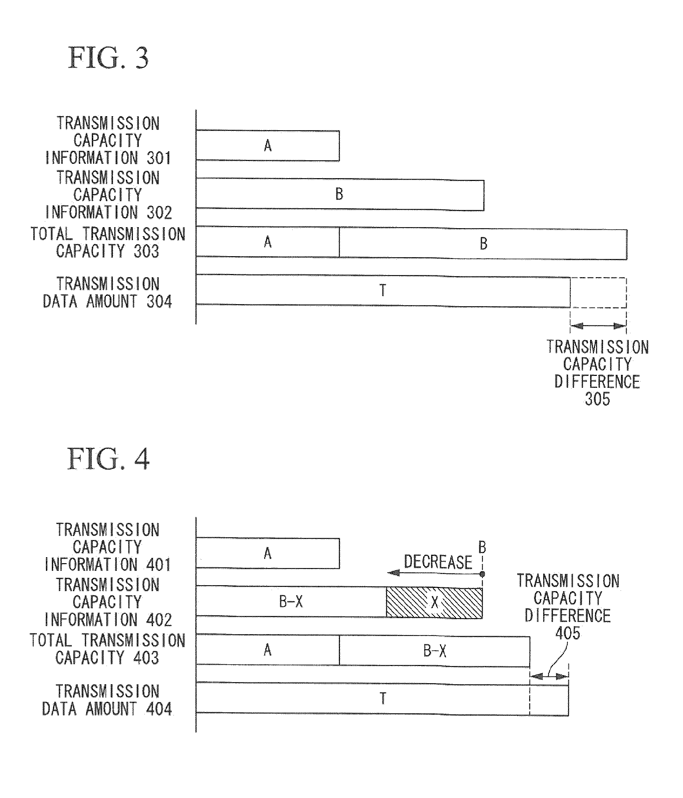

Fig. 3 is a diagram showing a relationship between the transmission capacity information of radio lines and the amount of transmission data, as example data.
Here, an example of the transmission capacity information D4 (see Fig. 1) input into the load balancing control unit 11 is denoted as transmission capacity information 301, and similarly, an example of the transmission, capacity information D6 (see Fig. 1) input into the load balancing control unit 11 is denoted as transmission capacity information 302. Additionally, the total transmission capacity is denoted as total transmission capacity 303, and an example of the transmission data amount D21 (see Fig. 2) is denoted as transmission data amount 304. In addition, an example of the transmission capacity difference D23 (see Fig. 2) is denoted as a transmission capacity difference 305.
Below, a specific example in which the total transmission capacity 303 of the relevant radio lines exceeds the transmission data amount 304 will be explained with reference to the example data of Fig. 3.

In Fig. 3, when the transmission capacity indicated by the transmission capacity information 301 for the radio line R1 is called "A" and the transmission capacity indicated by the transmission capacity information 302 for the radio line R2 is called "B", the total transmission capacity 303 of the relevant radio lines is "A+B". When the amount of transmission data indicated by the transmission data amount 304 is called "T", the transmission capacity difference computation part 112 computes the transmission capacity difference 305 represented by "A+B-T".
In the example data of Fig. 3, the state of the transmission capacity difference 405 is "A+B-T > 0", and thus the transmission capacity difference 405 has a positive value. Accordingly, in this specific example, the total transmission capacity 303 of the radio lines exceeds the transmission data amount 304, so that no flow control for the transmission data is executed by the transmission data control part 113.

In addition, the transmission capacity ratio computation part 114 computes the transmission capacity ratio as A:B, and sends the computed ratio to the transmission data division part 115. Based on the transmission capacity ratio (A:B), the transmission data division part 115 performs the data division so as to produce the radio line transmission data D1 by computing TxA/(A+B) and the radio line transmission data D5 by computing TxB/(A+B).

Fig. 4 is a diagram showing another relationship between the transmission capacity information of radio lines and the amount of transmission data, as example data.
Here, an example of the transmission capacity information D4 (see Fig. 1) input into the load balancing control unit 11 as denoted as transmission capacity information 401, and similarly, an example of the transmission capacity information D6 (see Fig. 1) input into the load balancing control unit 11 is denoted as transmission capacity information 402. Additionally, the total transmission capacity is denoted as total transmission capacity 403, and an example of the transmission data amount D21 (see Fig. 2) is denoted as transmission data amount 404. In addition, an example of the transmission capacity difference D23 (see Fig. 2) is denoted as a transmission capacity difference 405.

Below, a specific example in which the transmission data amount 404 exceeds the total transmission capacity 403 of the relevant radio lines will be explained with reference to the example data of Fig. 4.
In Fig. 4, when the transmission capacity information 401 for the radio line R1 indicates A and the transmission capacity information 402 for the radio line R2 indicates a dynamically changed value B-X, the total transmission capacity 403 of the relevant radio lines is "A+B-X" in a manner similar to the specific example of Fig. 3. Also similarly, when the transmission data amount 404 is T, the transmission capacity difference 405 is "A+B-X -T'".
In the present specific example, the state of the transmission capacity difference 405 is "A+B-X-T < 0", and thus the transmission capacity difference 405 has a negative value. Accordingly, the transmission data amount 404 exceeds the total transmission capacity 403 of the radio lines, so that flow control for the transmission data D10 is executed by the transmission data control part 113.

Additionally, in the present specific example, the transmission capacity ratio is computed as A:(B-X), and sends the computed ratio to the transmission data division part 115. Based on the transmission capacity ratio (A:B-X), the transmission data division part 115 performs the data division so as to produce the radio line transmission data D1 by computing T×A/(A+B-X) and the radio line transmission data D5 by computing T×(B-X) /(A+B-X).
For the example data of Fig. 4, since the flow control (i.e., control of the amount of data transmitted at a time) for the transmission data D10 is executed by the transmission data control part 113 as described above, appropriate load balancing control can be performed without producing partial destruction of the transmission data D10 in the relevant radio line system.

The above-described functions of the radio transmission apparatus 1 in the present embodiment, in particular, the function of the load balancing control unit 11, may be implemented using a computer program, and such a computer program may be stored in an appropriate storage medium.

As described above, according to the radio transmission apparatus of the present embodiment having the load balancing control unit 11, the communication amount monitoring part 111 monitors the communication amount of the transmission data D10, and the transmission data control part 113 performs the flow control of the transmission data D10 so that the data does not exceed the total transmission capacity of the radio lines R1 and R2. The transmission data control part 113 sends the transmission data D22, whose amount is reduced to be transmittable through the band of the relevant lines, to the transmission data division part 115. Based on a ratio between the radio transmission capacities of the radio lines R1 and R2, the transmission data division part 115 performs division of the transmission data D22. Therefore, appropriate load balancing control can be performed without producing destruction of the transmission data in the relevant radio line system.

### INDUSTRIAL APPLICABILITY

The present invention can be applied to constriction of a radio transmission apparatus, and in particular, to construction of a radio transmission apparatus which can connect two different points via radio lines.

### Reference Symbols

- 1: radio transmission apparatus (relating to the present invention)
- 11: load balancing control unit
- 12, 13: modulation and demodulation unit
- 14: radio transmission and reception circuit
- 15: reception data control part
- 111: communication amount monitoring part
- 112: transmission capacity difference computation part
- 113: transmission data control part
- 114: transmission capacity ratio computation part
- 115: transmission data division part
- E1: LAN line
- R1, R2: radio line

## Claims

1. A radio transmission apparatus comprising:
a radio transmission and reception device that performs data transmission and reception via a plurality of radio lines; and
a wire transmission and reception device that performs data transmission and reception via at least one wire line, and
receiving data via the wire line, and sending the data via the radio lines,
wherein the radio transmission apparatus further comprises:
a flow control device wherein when the data received via the wire line is converted into transmission data to be sent via the radio lines, if the amount of the data received via the wire line exceeds a total transmission capacity of the radio lines, the flow control device performs flow control so as to convert the data received via the wire line to the transmission data whose amount is reduced to be transmittable through a band of the radio lines; and
a transmission data distribution device that distributes the transmission data to the respective radio lines based on a ratio between radio transmission capacities of the radio lines.

2. The radio transmission apparatus in accordance with claim 1, wherein:
the respective radio transmission capacities of the radio lines and the total transmission capacity thereof dynamically change.

3. The radio transmission apparatus in accordance with claim 1, wherein:
the wire line is a LAN line.

4. The radio transmission apparatus in accordance with claim 1, further comprising:
a modulation method control device that controls a modulation method of each of the radio lines, and outputs a radio transmission capacity of each radio line based on the relevant modulation method.

5. A radio transmission method that connects two different points via a plurality of radio lines and sends data, wherein each of the radio lines is monitored, and if respective radio transmission capacities of the radio lines change, data to be transmitted is distributed to the respective radio lines based on a ratio between the transmission capacities of the radio lines.

6. The radio transmission method in accordance with claim 5, comprising:
a radio transmission and reception step that performs data transmission and reception via the radio lines; and
a wire transmission and reception step that performs data transmission and reception via at least one wire line, and
receiving data via the wire line, and sending the data via the radio lines,
wherein the radio transmission method further comprises:
a flow control step wherein when the data received via the wire line is converted into transmission data to be sent via the radio lines, if the amount of the data received via the wire line exceeds a total transmission capacity of the radio lines, the flow control step performs flow control so as to convert the data received via the wire line to the transmission data whose amount is reduced to be transmittable through a band of the radio lines; and
a transmission data distribution step that distributes the transmission data to the respective radio lines based on a ratio between the radio transmission capacities of the radio lines.

7. The radio transmission method in accordance with claim 6, wherein:
the respective radio transmission capacities of the radio lines and the total transmission capacity thereof dynamically change.

8. The radio transmission method in accordance with claim 6, further comprising
a modulation, method control step that controls a modulation method of each of the radio lines, and outputs a radio transmission capacity of each radio line based on the relevant modulation method.

9. A radio transmission network having a structural element which is the radio transmission apparatus in accordance with any one of claim 1 to 4, which connects two different points via the radio lines.

10. A computer program comprising:
a radio transmission and reception step that performs data transmission and reception via a plurality of radio lines; and
a wire transmission and reception step that performs data transmission and reception via at least one wire line, and
making a computer to control a radio transmission apparatus which receives data via the wire line and sends the data via the radio lines,
wherein the computer program further comprises:
a flow control step wherein when the data received via the wire line is converted into transmission data to be sent via the radio lines, if the amount of the data received via the wire line exceeds a total transmission capacity of the radio lines, the flow control step performs flow control so as to convert the data received via the wire line to the transmission data whose amount is reduced to be transmittable through a band of the radio lines; and
a transmission data distribution step that distributes the transmission data to the respective radio lines based on a ratio between radio transmission capacities of the radio lines.
